# EUROPEAN PATENT APPLICATION

(11) **EP 4 851 874 A1**
(43) Date of publication of application: **09.12.2026**
(21) Application number: 24926645.3
(22) Date of filing: 06.08.2024
(51) Int. Cl.: G06N 20/00

(54) **MODEL UPDATING METHOD, APPARATUS, AND SYSTEM**

(30) Priority: 29.02.2024 CN 202410234970
(71) Applicant: HUAWEI TECHNOLOGIES CO., LTD., Shenzhen, Guangdong 518129 (CN)
(72) Inventor: MA, Hao, Shenzhen, Guangdong 518129 (CN); HONG, Ning, Shenzhen, Guangdong 518129 (CN); WU, Changmin, Shenzhen, Guangdong 518129 (CN); CHEN, Jingfu, Shenzhen, Guangdong 518129 (CN); LIU, Jiawen, Shenzhen, Guangdong 518129 (CN); YUE, Lin, Shenzhen, Guangdong 518129 (CN)
(74) Representative: Maiwald GmbH
(86) International application number: PCT/CN2024/110189
(87) International publication number: WO 2025/179778

(57) **Abstract**

A model update method, apparatus, and system are provided. In the model update method, a computer device displays a first processing result obtained by processing system data of a network system based on a model. After viewing the first processing result, a user may perform an operation of inputting knowledge data, so that the computer device obtains target knowledge data obtained by performing format conversion on the knowledge data. Then, the computer device responds to a model update instruction, updates the model by using the target knowledge data, to obtain an updated model, and finally processes the system data of the network system based on the updated model to obtain a second processing result, and displays the second processing result. In this way, the user can directly participate in a model tuning process and update a user model in real time to satisfy changing service requirements and personalized expectations of the user.

## Description

This application claims priority to Chinese Patent Application No. 202410234970.1, filed with the China National Intellectual Property Administration on February 29, 2024 and entitled "MODEL UPDATE METHOD, APPARATUS, AND SYSTEM", which is incorporated herein by reference in its entirety.

### TECHNICAL FIELD

This application relates to the computer field, and in particular, to a model update method, apparatus, and system.

### BACKGROUND

Models can be used in a variety of domains to implement various data processing tasks. For example, in the network operations and maintenance field, a model can be used to analyze running data such as logs of a network system, to satisfy service requirements such as identifying an anomaly or a fault of the network system, finding a cause of the anomaly or the fault, and predicting a possible fault in the future.

To adapt to changes in user service requirements, improve model quality such as accuracy, and the like, model update is necessary. However, currently, a model provider needs to regularly release a new model, and then a user selects to obtain the new model to implement update. Alternatively, the user regularly communicates with the model provider to feed back an expectation for a model, and the provider manually updates, based on the user expectation, the model used by the user. Consequently, a model update operation cycle is long and complex, and the model cannot be updated in real time to satisfy changing service requirements and personalized expectations of the user.

### SUMMARY

This application provides a model update method, apparatus, and system, to resolve a problem that as a model provider updates a model, an operation cycle is long and complex, and the model cannot be updated in real time to satisfy changing service requirements and personalized expectations of a user.

According to a first aspect, a model update method is provided, where the model update method is executed by a computer device, and includes displaying a first processing result, where the first processing result includes a first running analysis result that is of a network system and that is obtained by processing system data of the network system based on a model; responding to an operation of inputting knowledge data to obtain target knowledge data, where the target knowledge data includes data obtained by performing format conversion on the knowledge data, and the knowledge data includes knowledge data that is input by a user and that is related to the processing result of the model; further responding to a model update instruction and updating the model by using the target knowledge data, to obtain an updated model; and finally processing the system data of the network system based on the updated model to obtain a second processing result, and displaying the second processing result, where the second processing result includes a second running analysis result of the network system.

Compared with model update performed by a model provider, for example, the model provider regularly releases a new model or the provider manually updates a model, used by a user, based on an expectation fed back by the user through regular communication, in the model update method provided in this application, the computer device running the model locally updates the model and skips a long and complex operation cycle of the model provider, thereby shortening model update response time. In addition, the computer device can receive the knowledge data that is input by the user based on service requirements and personalized expectations. The computer device can use the knowledge data to update the model in an intelligent and customized manner, and the updated model can also better satisfy the changing service requirements and the personalized expectations of the user.

In a possible implementation, responding to the operation of inputting the knowledge data includes: receiving feedback operation data, where the feedback operation data includes the first processing result and a feedback identifier, and the feedback identifier indicates a manner of updating the model based on the first processing result.

The feedback operation data of the user for the first processing result is obtained, so that the feedback identifier of the user for the first processing result, for example, positive feedback or negative feedback, can be obtained. Then, the positive feedback or the negative feedback of the user indicates model update, so that the user can perform a model update operation in an intelligent and simple manner, and the updated model can better satisfy the personalized expectations and the service requirements of the user.

In a possible implementation, responding to the operation of inputting the knowledge data includes: receiving a trigger operation performed by the user on a feedback control displayed by the computer device, where the computer device receives the feedback operation data.

The trigger operation is performed by the user on the feedback control displayed by the computer device, to obtain the feedback operation data, so that a user operation can be more efficient, and the model update operation can be performed in a more intelligent manner.

In another possible implementation, responding to the operation of inputting the knowledge data to obtain the target knowledge data includes: performing binary format conversion on the feedback operation data to obtain first knowledge data included in the target knowledge data.

Binary conversion is performed on the feedback operation data of the user for the first processing result, for example, the feedback identifier indicating the positive feedback or the negative feedback, so that binary data that can be better identified and processed by a computer can be obtained, and the model update operation is completed in a smoother manner.

In another possible implementation, responding to the operation of inputting the knowledge data includes: receiving empirical text input by the user.

The empirical text may include valuable empirical information accumulated by the user. The empirical text is input by the user, so that the model can be updated by fully utilizing existing experience, a model effect is well improved and the service requirements are well satisfied, and the user can perform the model update operation in an intelligent and simple manner.

In another possible implementation, responding to the operation of inputting the knowledge data to obtain the target knowledge data includes: performing string format conversion on the empirical text to obtain second knowledge data included in the target knowledge data.

The string format conversion is performed on the empirical text that is input by the user, so that field data that can be well identified and processed by a computer and that is arranged according to a specific specification can be obtained, and the model update operation can be completed in a smoother manner.

In another possible implementation, responding to the operation of inputting the knowledge data further includes: receiving a text extraction intent input by the user; and performing string format conversion on the empirical text to obtain the second knowledge data included in the target knowledge data includes: performing text information extraction on the empirical text based on the text extraction intent to obtain target text, and performing string format conversion on the target text to obtain the second knowledge data.

The user may provide the text extraction intent, for example, "alarm operations and maintenance", and then perform targeted information extraction on the empirical text based on the text extraction intent and a language model, to obtain text related to the "alarm operations and maintenance". Then, format conversion is performed on the text related to the "alarm operations and maintenance" for model update. In this way, during the model update, the model is specifically adjusted, so that a model processing result related to the "alarm operations and maintenance" can generate expected changes, satisfying personalized requirements of the user for the model update in a more intelligent and targeted manner.

In another possible implementation, the model update instruction includes a weight of the target knowledge data, and updating the model by using the target knowledge data includes: adjusting a parameter of the model by using the target knowledge data, where an adjustment amplitude of the parameter is related to the weight of the target knowledge data.

The weight in the model update instruction may be determined based on a user operation or set by the user. The adjustment amplitude of the parameter during the model update is determined based on the weight, so that parameter adjustment during the model update can better satisfy the expectations of the user, and the updated model can better satisfy the personalized expectations of the user.

In another possible implementation, a value of the weight is related to a quantity of operations of a feedback operation performed by the user on the first processing result.

A value of a weight of knowledge data is directly determined based on a quantity of operations of a feedback operation performed by the user, so that the user can perform the model update operation in a more intelligent and simple manner.

In another possible implementation, the computer device further displays an obtaining completion prompt of the target knowledge data.

The computer device displays a data obtaining completion prompt, so that the user can be prompted to perform the subsequent model update in a more intuitive and efficient manner, and user experience is better.

In another possible implementation, the computer device further displays the target knowledge data.

The computer device displays the target knowledge data, so that the user can view data content in an intuitive manner, to help the user ensure data correctness, and have better user experience.

According to a second aspect, a model update apparatus is provided, where the apparatus includes a display module, a processing module, and an input module. The display module is configured to display a first processing result, where the first processing result includes a first running analysis result that is of a network system and that is obtained by processing system data of the network system based on a model. The input module is configured to receive a data input operation. The processing module is configured to respond to an operation of inputting knowledge data to obtain target knowledge data that is obtained by performing format conversion on the knowledge data, and the knowledge data includes knowledge data that is input by a user and that is related to the processing result of the model. The input module is further configured to receive a model update instruction. The processing module is further configured to respond to the model update instruction and update the model by using the target knowledge data, to obtain an updated model. The processing module is further configured to process the system data of the network system based on the updated model to obtain a second processing result, where the second processing result includes a second running analysis result of the network system. The display module is further configured to display the second processing result.

In a possible implementation, the processing module is further configured to: receive feedback operation data, where the feedback operation data includes the first processing result and a feedback identifier, and the feedback identifier indicates a manner of updating the model based on the first processing result.

In a possible implementation, the processing module is further configured to: receive a trigger operation performed by the user on a feedback control displayed by the computer device, where the computer device receives the feedback operation data.

In another possible implementation, the processing module is further configured to: perform binary format conversion on the feedback operation data to obtain first knowledge data included in the target knowledge data.

In another possible implementation, the processing module is further configured to: receive empirical text input by the user.

In another possible implementation, the processing module is further configured to: perform string format conversion on the empirical text to obtain second knowledge data included in the target knowledge data.

In another possible implementation, the processing module is further configured to: receive a text extraction intent input by the user; and performing string format conversion on the empirical text to obtain the second knowledge data included in the target knowledge data includes: performing text information extraction on the empirical text based on the text extraction intent to obtain target text, and performing string format conversion on the target text to obtain the second knowledge data.

In another possible implementation, the model update instruction includes a weight of the target knowledge data, and the processing module is further configured to: adjust a parameter of the model by using the target knowledge data, where an adjustment amplitude of the parameter is related to the weight of the target knowledge data.

In another possible implementation, a value of the weight is related to a quantity of operations of a feedback operation performed by the user on the first processing result.

In another possible implementation, the display module is further configured to display an obtaining completion prompt of the target knowledge data.

In another possible implementation, the display module is further configured to display the target knowledge data.

According to a third aspect, a computer device is provided. The computer device includes a processor, a memory, and a display. The memory is configured to store instructions, the processor is configured to execute the instructions stored in the memory, to cause the computer device to perform the model update method according to the first aspect, and the display is configured to implement a display step in a process in which the computer device performs the method.

According to a fourth aspect, a computer program product including instructions is provided. When the instructions are run by a computer device, the computer device is caused to perform the model update method according to the first aspect.

According to a fifth aspect, a computer-readable storage medium is provided, and includes computer program instructions. When the computer program instructions are executed by a computer device, the computer device performs the model update method according to the first aspect.

In this application, based on the implementations provided in the foregoing aspects, the implementations may further be combined to provide more implementations.

The following description includes more specific content about the implementations provided in the foregoing aspects.

### BRIEF DESCRIPTION OF DRAWINGS

FIG. 1 is a schematic flowchart of data processing of a model according to an embodiment of this application;
FIG. 2 is a schematic flowchart of data processing of a model update system according to an embodiment of this application;
FIG. 3 is a diagram 1 of an interface of a model update system according to an embodiment of this application;
FIG. 4 is a diagram 2 of an interface of a model update system according to an embodiment of this application;
FIG. 5 is a diagram 3 of an interface of a model update system according to an embodiment of this application;
FIG. 6 is a diagram 4 of an interface of a model update system according to an embodiment of this application;
FIG. 7 is a diagram 5 of an interface of a model update system according to an embodiment of this application;
FIG. 8 is a schematic flowchart 1 of a model update method according to an embodiment of this application;
FIG. 9 is a schematic flowchart 2 of a model update method according to an embodiment of this application;
FIG. 10 is a schematic flowchart 3 of a model update method according to an embodiment of this application;
FIG. 11 is a diagram of a structure of a model update apparatus according to an embodiment of this application;
FIG. 12 is a diagram of a structure of a computer device according to an embodiment of this application; and
FIG. 13 is a diagram of a structure of a computer device cluster according to an embodiment of this application.

### DESCRIPTION OF EMBODIMENTS

For ease of understanding, terms in this application are first described.

Knowledge data refers to data related to knowledge or information, and may include various types of data, such as text, an image, audio, a video, and a link, and various forms of knowledge, such as a fact, a concept, a theory, a viewpoint, a rule, and a method.

A model is a set of a series of algorithms and technologies, and may include a neural network, a knowledge graph, and the like. The model can be used to process service data to analyze and obtain a service result. For example, in the network operations and maintenance field, the model can be used to analyze running data such as logs of a network system, to achieve service results such as obtaining an anomaly or a fault of the network system, obtaining a cause of the anomaly or the fault, and predicting a possible fault in the future.

The model described in this application may be a model used in various technical fields, such as power grid operations and maintenance and traffic operations and maintenance. In this specification, a model used in network operations and maintenance is mainly used as an example for description.

A network system may be a system including network hardware and network software, for example, a system in which a plurality of computer systems that are in different geographical locations and have independent functions are interconnected through communication devices and lines, and the network software is used to implement resource sharing and information transmission in a network.

The network operations and maintenance refers to operations and maintenance on the network system. An objective of the network operations and maintenance includes ensuring stable running and efficient management of network services. The network operations and maintenance usually relates to a series of technical tasks and management responsibilities, such as identifying an anomaly or a fault, analyzing a cause of the anomaly or the fault, and predicting a possible fault in the future.

The network operations and maintenance field faces increasing network scales, complex service requirements, and rapidly changing network environments. A manual management method cannot cope with these challenges. Therefore, a set of algorithms and technologies, for example, models such as the neural network and the knowledge graph, may be specially designed for a service of a network operations and maintenance system, and the network operations and maintenance is implemented by performing in-depth analysis and learning on data by using these models, so that overall efficiency of the network operations and maintenance can be improved in a plurality of aspects. For example, the models are used to monitor network data flows in real time, analyze an abnormal pattern, and predict a potential fault, to improve network availability and stability. For another example, the models are used to analyze historical data and a real-time monitoring result, to provide decision support such as recommend optimal network configuration, a troubleshooting solution, and a performance optimization policy, to help operations and maintenance personnel cope with various situations in a more intelligent manner. For another example, automatic network configuration, fault diagnosis, and rectification can also be implemented by using the models, thereby reducing workload of the operations and maintenance personnel and improving management efficiency.

The models are usually designed, developed, and trained by a product provider, so that the models can satisfy some general service requirements. The provider provides the models for a user, and the user can deploy the models in a service system of the user, such as the network system. In addition, to adapt to changes in user service requirements, improve model quality such as accuracy, and the like, model update is necessary.

An update manner may be that the model provider regularly adjusts a model offline, for example, adjusts a model structure and retrains the model, and then releases an updated model, and then the user selects to obtain the new model to implement update. When this method is used, as the new model is released, the provider usually provides corresponding user training to ensure that the user understands new functions and usage methods of the new model.

Another update manner may be that the user regularly communicates with and performs feedback with the model provider. For example, the user provides feedback information (such as user experience and an expectation for model performance) about a service model for the provider through an interaction interface or in another manner. For another example, the user communicates with the provider face to face, so that the provider understands the service requirements, a special scenario, and the expectation of the user for the model. After obtaining the service requirements and the expectation of the user for model, the provider manually adjusts the model used by the user, such as improving an algorithm and adjusting a weight, to improve the performance and adaptability of the model, and satisfy the service requirements and the expectation of the user.

It can be learned that the foregoing existing model update manners depend on the provider to perform update. Consequently, a model update operation cycle is long and complex, and the model of the user cannot be updated in real time to satisfy changing service requirements and personalized expectations of the user. In addition, in the foregoing update manners, the provider needs to perform model maintenance, which consumes a large quantity of resources such as labors and time of the provider. In addition, the user needs to spend time and resources to communicate and coordinate with the provider, which increases operation burden of the user and causes low efficiency.

In addition, in the 1^{st} manner, a model version is updated at a fixed cycle, and an updated model still satisfies the general service requirements. Consequently, the model cannot be adjusted in real time to adapt to specific requirements of the user, and an effect of using the model by the user in some specific scenarios different from a general scenario is unsatisfactory. In addition, in the 2^{nd} manner, in a process of communication and feedback between the user and the provider, information may be transferred layer by layer, causing an information loss. Consequently, model deficiency and a target tuning direction cannot be clearly and accurately fed back to model tuning personnel, and in this case, a model tuning direction may be misleading, affecting model performance improvement. In addition, there is uncertainty of subjective judgment in manual model adjustment by the model tuning personnel, a tuning result is unstable, and it is difficult to quickly and accurately determine an optimal direction of model tuning.

To resolve a problem that the model update operation cycle is long and complex so that the model of the user cannot be updated in real time to satisfy changing service requirements and personalized expectations of the user, and it is difficult for the user to directly participate in a model tuning process so that flexibility of the user in a service procedure and accuracy of the model tuning are limited, this application provides a model tuning method and system, and provides an intelligent human-computer interaction function. The function includes: a computer device displays a first processing result obtained by processing system data of a network system based on a model; after viewing the first processing result, the user may perform an operation of inputting knowledge data based on deficiency of the processing result or an expectation of the model, so that the computer device obtains target knowledge data obtained by performing format conversion on the knowledge data; then, the computer device responds to a model update instruction, updates the model by using the target knowledge data, to obtain an updated model; and finally, the computer device processes the system data of the network system based on the updated model to obtain a second processing result, and displays the second processing result. In this way, the user can directly participate in the model tuning process and update the model of the user in real time to satisfy the changing service requirements and the personalized expectations of the user, improving flexibility of the user in the service procedure and accuracy of the model tuning. An entire operation process is intelligent, simple, and efficient. In addition, the user can view a change of the processing result before and after the model update in an intuitive manner, thereby improving user experience.

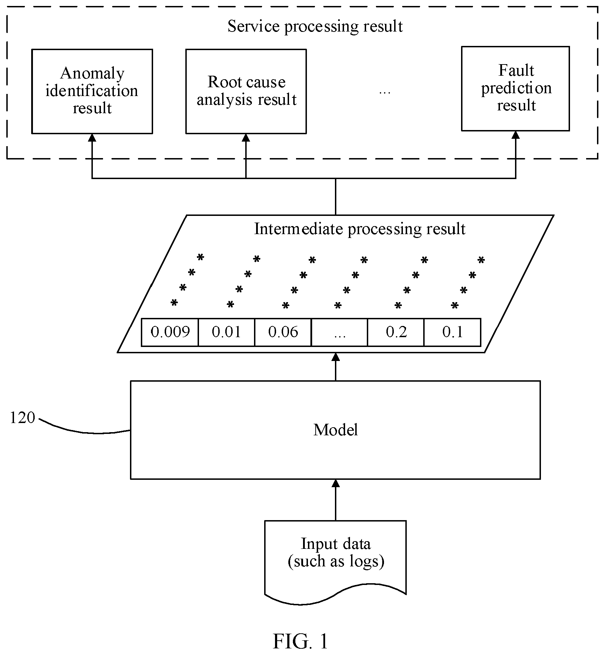

FIG. 1 is a schematic flowchart of data processing of a model according to an embodiment of this application. As shown in FIG. 1, in a network operations and maintenance system, input data (for example, the input data includes system data such as logs, network configuration, and a device parameter of a network system) may be input into a model 120 for processing, to obtain an intermediate processing result, and then the intermediate processing result is analyzed by using various downstream service algorithms, to obtain a corresponding service processing result.

In merely an example, the model 120 may include various algorithms or models such as a neural network, a large language model, and a knowledge graph. The intermediate processing result may include an analysis result of each log in the input data, for example, a probability value 0.009, 0.01, 0.06, ..., 0.2, or 0.1. A probability value of a log may indicate a probability that the log has an anomaly. The service processing result may include an anomaly identification result, a root cause analysis result, a fault prediction result, a rectification suggestion result, and the like. The anomaly identification result may be obtained by analyzing the intermediate processing result based on various feasible algorithms such as a probability value statistical method. The root cause analysis result may be obtained by analyzing the intermediate processing result based on various feasible algorithms such as a machine learning model. The fault prediction result may be obtained by analyzing the intermediate processing result based on various feasible algorithms such as the machine learning model. The rectification suggestion result may be obtained by analyzing the intermediate processing result based on various feasible algorithms such as the machine learning model.

It should be noted that FIG. 1 shows merely an embodiment of the data processing procedure of a model. The service processing result may be obtained in the method shown in FIG. 1, or the service processing result may alternatively be directly obtained by processing the input data through the model 120, or the service processing result may be obtained through another feasible method and by processing the input data through the model 120.

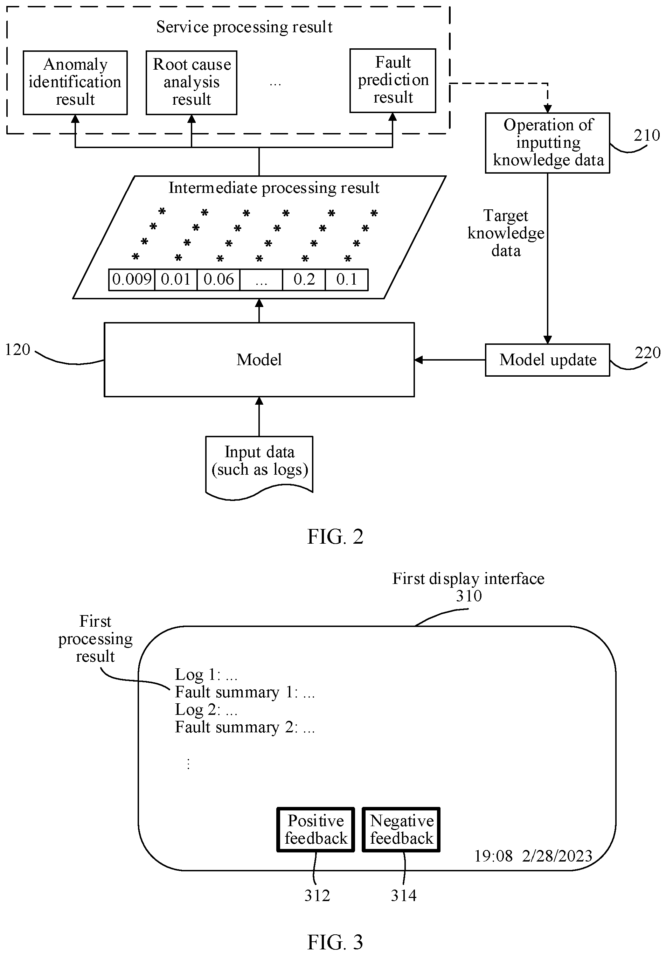

FIG. 2 is a schematic flowchart of data processing of a model update system according to an embodiment of this application. A provider may provide a model update system to locally update a model for a user. The system can be provided for the user in a form of a software product or another feasible product. The model update system may be implemented on a computer device. The computer device may include a single computer device, or may include a computer cluster including a plurality of computer devices.

As shown in FIG. 2, the data processing procedure of the model in FIG. 1 is still used as an example. Through the model update system, the computer device may display the service processing result obtained based on the original model 120. After viewing the service processing result, the user may perform, based on whether the user is satisfied with the processing result and an expectation for the processing result, an operation of inputting knowledge data 210 through the system, so that the computer device obtains the knowledge data related to the model processing result. Further, the computer device may perform format conversion on the knowledge data to obtain target knowledge data. The target knowledge data may be data that can be identified and processed by the computer device. Furthermore, after the target knowledge data is obtained, the user may send a model update instruction through the system, and the computer device responds to the model update instruction, and performs model update 220 by using the target knowledge data. After a model update operation is completed, an updated model may be used to perform a data processing task. For example, input data (which may be the input data of the original model or may be new input data) may be processed based on the updated model, to obtain a new service processing result. The computer device may also display the new service processing result, and the user may view a change of the service processing result in an intuitive manner.

It should be noted that the model update system may include a processing device and a display device connected to the processing device. A display function and a human-computer interaction function (for example, a data input operation or an instruction sending operation of the user) of the model update system may be implemented through a human-computer interaction interface, and the human-computer interaction interface may be presented to the user through the display device. The model update system may further include an input device connected to the processing device, for example, a mouse, a keyboard, or a touch display that can implement user input. The user may perform the data input operation, the instruction sending operation, or the like through the input device.

The following describes the model update system in detail with reference to a diagram of an interface of the model update system.

FIG. 3 is a diagram 1 of an interface of a model update system according to an embodiment of this application. As shown in FIG. 3, a first display interface 310 is a human-computer interaction interface of the model update system. The first display interface 310 displays the service processing result obtained based on the original model 120, for example, an anomaly identification result of a network system, which is referred to as a first processing result in this application. The anomaly identification result may include information about each log, for example, information about a log 1 and information about a log 2, and may further include an anomaly identification result corresponding to each log, for example, a fault summary 1 of the log 1 and a fault summary 2 of the log 2.

In some embodiments, the first display interface 310 may further include functional modules such as a first feedback control-positive feedback 312 and a second feedback control-negative feedback 314 that are used by a user to perform a feedback operation on the anomaly identification result. The control (positive feedback 312) may be used, when the user triggers this feedback control (for example, clicks this feedback control) on the interface, to obtain a feedback identifier of the user for the anomaly identification result as positive feedback (for example, agreed/active). The control (negative feedback 314) may be used, when the user clicks this module on the interface, to obtain a feedback identifier of the user for the anomaly identification result as negative feedback (for example, disagreed/passive). The user may click the feedback control using a mouse or through another feasible method. In addition to the feedback control, the first display interface 310 may include a feedback data input box. The user may alternatively provide feedback on the anomaly identification result by inputting feedback information such as the positive feedback/negative feedback into the feedback data input box or through another feasible manner.

In some embodiments, the user may perform the feedback operation on the anomaly identification result corresponding to each log, so that the computer device may obtain feedback operation data (including the anomaly processing result, namely, the first processing result, and the feedback identifier such as the positive feedback/negative feedback) of the user for the anomaly identification result corresponding to each log.

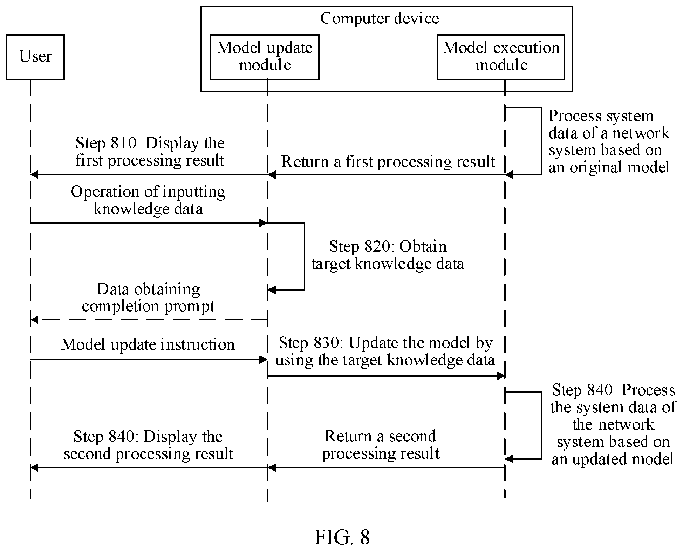

After receiving the feedback operation data of the user for the first processing result, the computer device may perform format conversion on the feedback operation data, to obtain first knowledge data to be used in subsequent model update. For more content of performing format conversion on the feedback operation data, refer to FIG. 8 and related descriptions thereof.

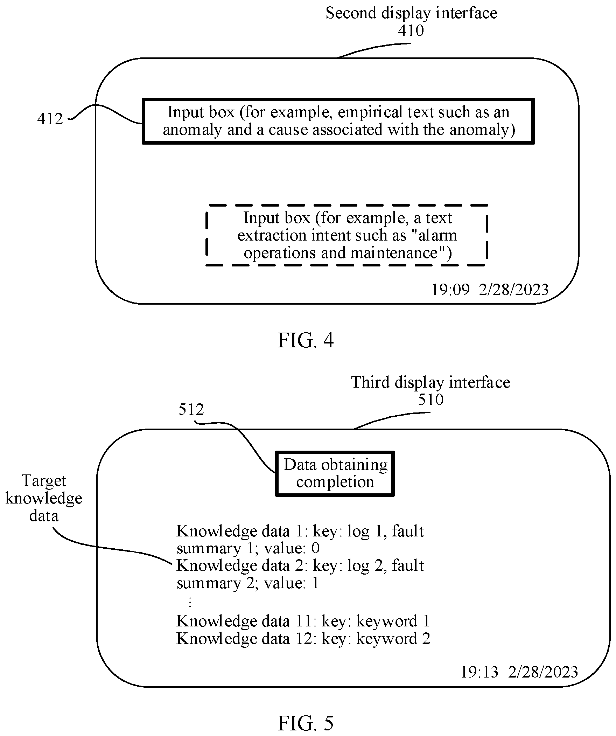

FIG. 4 is a diagram 2 of an interface of a model update system according to an embodiment of this application. As shown in FIG. 4, a second display interface 410 is a human-computer interaction interface of the model update system. The second display interface 410 may include an empirical text input box 412, and the empirical text input box 412 may be used by a user to input empirical text of network operations and maintenance.

In some embodiments, the user may manually input empirical text through the empirical text input box 412, for example, input keywords/text such as a network system event, an anomaly associated with the event, and a cause associated with the anomaly. After obtaining the input text, the computer device may perform format conversion to obtain second knowledge data to be used in subsequent model update. In some embodiments, the empirical text input box 412 may provide a text input template, where the template includes submodules in which a plurality of types of keywords or text, such as the network system event, the anomaly associated with the event, and the cause associated with the anomaly, are correspondingly filled. The user simply needs to input a keyword or text of a corresponding type in each submodule based on the template.

In some embodiments, the user may upload a document of empirical text through the empirical text input box 412. After obtaining the document, the computer device may perform text information extraction on the empirical text, and perform format conversion on extracted text, to obtain second knowledge data to be used in subsequent model update.

For more content of performing format conversion on the empirical text, refer to FIG. 8 and related descriptions thereof.

In some embodiments, the second display interface 410 may also include a text extraction intent input box 414, and the text extraction intent input box 414 may be used by the user to input a text extraction intent. The user provides the text extraction intent, for example, "alarm operations and maintenance", and then the computer device may perform targeted information extraction on the empirical text based on the text extraction intent, to obtain text related to the "alarm operations and maintenance". Then, format conversion is performed on the text related to the "alarm operations and maintenance" for the model update. For more content of the computer device performing targeted information extraction on the empirical text based on the text extraction intent, refer to FIG. 8 and related descriptions thereof.

FIG. 5 is a diagram 3 of an interface of a model update system according to an embodiment of this application. As shown in FIG. 5, a third display interface 510 is a human-computer interaction interface of the model update system. After the target knowledge data is obtained through the first display interface 310 and/or the second display interface 410, the third display interface 510 may display a data obtaining completion prompt 512, and may also display the target knowledge data (which may include the first knowledge data and/or the second knowledge data).

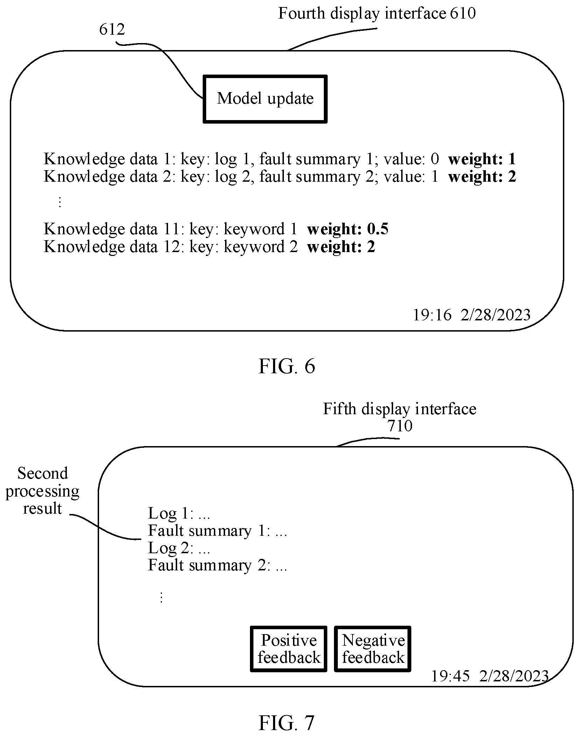

After viewing the third display interface 510, a user may learn that obtaining of the target knowledge data is completed, and may continue to perform subsequent model update, that is, enter an interface shown in FIG. 6.

FIG. 6 is a diagram 4 of an interface of a model update system according to an embodiment of this application. As shown in FIG. 6, a fourth display interface 610 is a human-computer interaction interface of the model update system. The fourth display interface 610 may be used by a user to send a model update instruction. For example, the fourth display interface 610 may include a model update instruction sending control 612, and the model update instruction sending control 612 may be used, when the user clicks the control, to send the model update instruction to a processing device of the computer device.

In some embodiments, the model update instruction may include a weight of the target knowledge data, and the weight is related to an adjustment amplitude of a model parameter during model update. The fourth display interface 610 may also display a weight of each piece of the target knowledge data. In some embodiments, the fourth display interface 610 may be further used by the user to perform an operation of modifying or setting the weight of the target knowledge data. For more specific content of the weight of the target knowledge data, refer to FIG. 8 and related descriptions thereof.

FIG. 7 is a diagram 5 of an interface of a model update system according to an embodiment of this application. As shown in FIG. 7, a fifth display interface 710 is a human-computer interaction interface of the model update system. The fifth display interface 710 may be used to display a new service processing result obtained based on an updated model, for example, a new anomaly identification result of a network system, which is referred to as a second processing result in this application. As the model has been customized and updated based on expectations of a user, the second processing result may more satisfy the user, or satisfy the expectations of the user, or satisfy a new service requirement.

In some embodiments, a function of the fifth display interface 710 is similar to that of the first display interface 310. For example, the fifth display interface 710 may also include feedback controls that are used by the user to perform a feedback operation on the anomaly identification results.

In some embodiments, after viewing the fifth display interface 710, the user may further choose whether to perform a new round of model update procedure based on a requirement.

FIG. 8 is a schematic flowchart 1 of a model update method according to an embodiment of this application. The model update method shown in FIG. 8 may be implemented using the model update system in FIG. 2. As shown in FIG. 8, the method includes the following steps.

Step 810: Display a first processing result.

The first processing result includes a service processing result obtained by processing data based on a current model (for example, an original model 120). In merely an example, the first processing result includes a first running analysis result that is of a network system and that is obtained by processing system data of the network system based on the model.

Step 820: Respond to an operation of inputting knowledge data to obtain target knowledge data.

The knowledge data includes knowledge data that is input by a user and that is related to the processing result of the model, and the knowledge data may be used to guide model adjustment.

The target knowledge data includes data obtained by performing format conversion on the knowledge data, and the target knowledge data may be identified and processed by a computer device.

In some embodiments, the user expects that the processing result obtained based on the model can satisfy user expectations. The operation of inputting the knowledge data may include a feedback operation of the user for the first processing result, that is, the knowledge data may include feedback operation data of the user for the first processing result, and the feedback operation data includes the first processing result and a feedback identifier (for example, positive feedback/negative feedback). The feedback identifier of the user for the first processing result may guide the model adjustment, so that the processing result obtained based on the model satisfies the user expectations or satisfies the user. For more content of the feedback operation of the user for the first processing result, refer to FIG. 3 and related descriptions thereof.

In some embodiments, when the knowledge data includes the feedback operation data of the user for the first processing result, the computer device may perform binary format conversion on the feedback operation data for the first processing result, for example, convert the feedback operation data into binary-type data, to obtain first knowledge data, and the first knowledge data may be used as the target knowledge data. For example, the computer device may convert the positive feedback on the first processing result into data "1", and convert the negative feedback on the first processing result into data "0".

In some embodiments, the user expects that the processing result obtained based on the model can satisfy some specific service requirements, or may be more accurate. The operation of inputting the knowledge data may include empirical text input by the user, that is, the knowledge data may include the empirical text input by the user (for example, a document that is of empirical text and that is uploaded by the user, or one or more pieces of keywords/text that are related to empirical text and that are directly input by the user). The empirical text may guide the model adjustment, so that the processing result obtained based on the model conform to empirical knowledge. For more content of an operation of inputting the empirical text by the user, refer to FIG. 4 and related descriptions thereof.

In some embodiments, when the knowledge data includes the empirical text input by the user, the computer device may perform string format conversion on the empirical text, for example, convert the empirical text into string-type data, to obtain second knowledge data, and the second knowledge data may be used as the target knowledge data. For example, the computer device may convert the text input by the user into a string including one or more keywords.

In some embodiments, when the empirical text input by the user includes a document (for example, a document like a network operations and maintenance support operation guide), the document may include a large amount of text content. The computer device may perform text information extraction on the document to obtain one or more required keywords (referred to as target text in this application), for example, a keyword related to network operations and maintenance.

In some embodiments, the user may further input a text extraction intent, for example, "alarm operations and maintenance". The computer device may perform text information extraction on the empirical text based on the text extraction intent, to obtain text that satisfies the text extraction intent or is related to the text extraction intent, that is, the target text. For example, the text extraction intent includes "alarm operations and maintenance", and the empirical text document includes the network operations and maintenance support operation guide (including knowledge data of a plurality of operations and maintenance directions or aspects in the network operations and maintenance). In this case, the computer device may input both the "alarm operations and maintenance" and a network operations and maintenance support operation guide document into a language model, and perform content mining and text information extraction on the document through the language model, to obtain a plurality of keywords related to the "alarm operations and maintenance" (such as a network system event related to the alarm operations and maintenance, a fault associated with the event, and a cause associated with the fault).

In some embodiments, the language model may include various models or algorithms that can implement text analysis and text information extraction, such as a Transformer.

In some embodiments, the language model may be trained based on text data related to the network system operations and maintenance, so that the language model can perform text information extraction related to the network operations and maintenance on text. A training method of the language model may include various feasible training methods, such as performing parameter adjustment on the language model based on a loss function (for example, a loss function determined based on a correlation between a text extraction result output by the language model and the network operations and maintenance).

In some embodiments, the language model may also be trained with reference to the text extraction intent, so that the language model can implement targeted extraction on the text related to the text extraction intent. For example, the text extraction intent and a text sample are input into the language model together, and the language model outputs a text extraction result. Based on whether the text extraction result is associated with the text extraction intent such as the alarm operations and maintenance in the network operations and maintenance, a value of a loss function (for example, a loss function determined based on a correlation between the text extraction result output by the language model and the text extraction intent) is determined, and a model parameter of the language model is adjusted to minimize the value of the loss function, so that the language model implements targeted extraction on the text related to the text extraction intent.

In some embodiments, the user may perform both the feedback operation on the first processing result and the operation of inputting the empirical text, so that the computer device can obtain the first knowledge data and the second knowledge data, and subsequently use the first knowledge data and the second knowledge data together for model update.

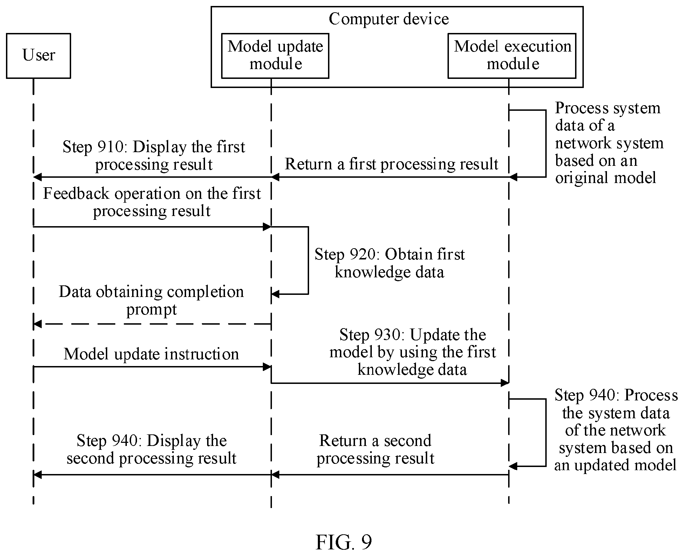

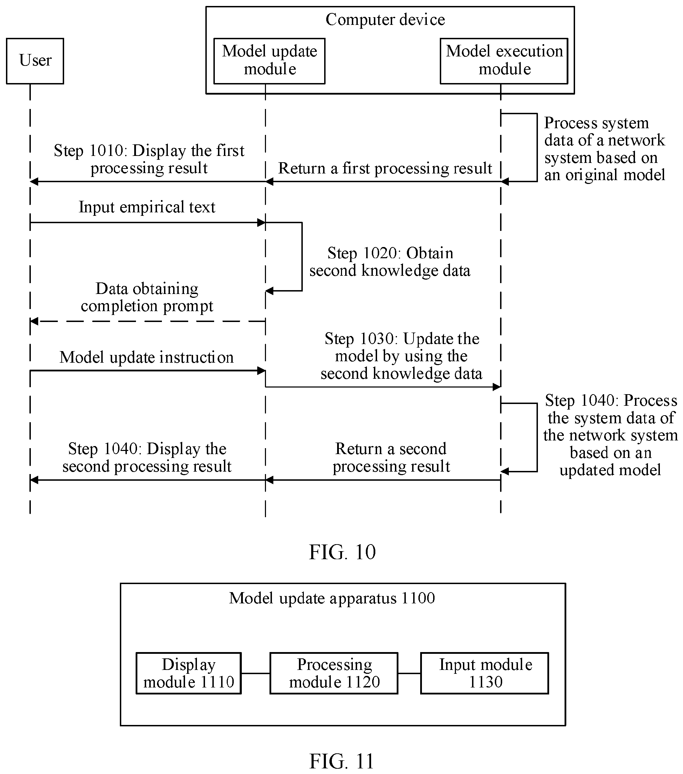

In some embodiments, the user may perform only the feedback operation on the first processing result, so that the computer device obtains the first knowledge data, and subsequently uses the first knowledge data to perform the model update, for example, a model update method shown in FIG. 9. In some embodiments, the user may alternatively perform only the operation of inputting the empirical text, so that the computer device obtains the second knowledge data, and subsequently uses the second knowledge data to perform the model update, for example, a model update method shown in FIG. 10.

In some embodiments, after obtaining the target knowledge data, the computer device may display a data obtaining completion prompt, so that the user knows that data obtaining is completed, and a subsequent procedure, for example, step 830, may continue.

In some embodiments, after obtaining the target knowledge data, the computer device may also display the target knowledge data, to present the target knowledge data to the user in an intuitive manner.

Step 830: Respond to a model update instruction and update the model by using the target knowledge data, to obtain an updated model.

The model update instruction may be in any instruction form that can indicate the computer device to perform a model update operation. The model update instruction may be indicated and sent by the user, and the computer device may perform the model update operation after receiving the instruction.

The model update operation may include adjusting a parameter of the model based on the target knowledge data through various feasible model update algorithms. The model update algorithms may include an SFT (supervised fine-tuning) method, an RLHF (reinforcement learning from human feedback) method, a method for adjusting a knowledge graph by adding an entity relationship to the knowledge graph, a method for adjusting a language model through a prompt (prompt), and the like.

For example, the computer device may perform the model update through the following method: When the model includes a neural network, and the target knowledge data includes the first knowledge data (for example, the binary-type data, where the positive feedback operation data is converted into data "1", and the negative feedback operation data is converted into data "0") and the second knowledge data (for example, the string-type data), the first knowledge data is converted into a first key-value pair (kv pair), where the first processing result is used as a key, and feedback data 0/1 is used as a value, and the second knowledge data is converted into a second key-value pair, where the second knowledge data is used as a key, and is assigned with a value 1. Then, the parameter of the model is fine-tuned through the SFT (supervised fine-tuning) method using two key-value pairs.

For another example, the computer device may perform the model update through the following method: When the model includes a neural network, and the target knowledge data includes the first knowledge data (for example, the binary-type data, where the positive feedback operation data is converted into data "1", and the negative feedback operation data is converted into data "0"), the first knowledge data is used to train a reward model, and then under an RLHF (reinforcement learning from human feedback) framework, the trained reward model is used to fine-tune a parameter of the neural network through a PPO (proximal policy optimization) method.

For another example, the computer device may perform the model update through the following method: When the model includes a neural network, and the target knowledge data includes the second knowledge data (for example, the string-type data), the second knowledge data is converted into a second key-value pair, where the second knowledge data is used as a key, and is assigned with a value 1. Then, the parameter of the model is fine-tuned through the SFT (supervised fine-tuning) method using the second key-value pair.

In some embodiments, the model update instruction may also include a weight of the target knowledge data, and when the computer device adjusts the parameter of the model by using the target knowledge data, an adjustment amplitude of the parameter is related to the weight of the target knowledge data. In an example, a piece of the target knowledge data is used to adjust the parameter of the model, and a weight corresponding to the piece of the target knowledge data is 0.5. In this case, when the parameter of the model is adjusted, a value of the parameter of the model is adjusted to 0.5 times the original value to be adjusted. In another example, a piece of the target knowledge data is used to adjust the parameter of the model, and a weight corresponding to the piece of target knowledge data is 2. In this case, when the parameter of the model is adjusted, a value of the parameter of the model is adjusted to twice the original value to be adjusted.

The weight of the target knowledge data may be determined based on a user operation or set by the user.

For example, a weight of the first knowledge data may be determined based on a quantity of operations of a feedback operation (for example, a quantity of times of clicking feedback) performed by the user on the first processing result. A larger quantity of operations indicates a larger weight. For example, if a quantity of operations on one processing result is 1, the weight of the first knowledge data obtained based on the feedback operation is 1. For another example, if a quantity of operations on one processing result is 2, the weight of the first knowledge data obtained based on the feedback operations is 2.

For another example, a weight of the second knowledge data may be set by the user, for example, set to 0.5 or 2.

Step 840: Obtain a second processing result based on the updated model, and display the second processing result.

The second processing result includes a new service processing result obtained by processing data based on the updated model. In merely an example, the second processing result includes a second running analysis result of the network system that is obtained by processing the system data of the network system based on the updated model.

FIG. 9 is a schematic flowchart 2 of a model update method according to an embodiment of this application. The model update method shown in FIG. 9 may be implemented using the model update system in FIG. 2. As shown in FIG. 9, the method includes the following steps.

Step 910: Display a first processing result.

Step 920: Respond to a feedback operation of a user on the first processing result, to obtain first knowledge data.

Step 930: Respond to a model update instruction and update a model by using the first knowledge data, to obtain an updated model.

Step 940: Obtain a second processing result based on the updated model, and display the second processing result.

For specific content of step 910, refer to step 810 in FIG. 8 and related content thereof. For specific content of step 920, refer to step 820 in FIG. 8 and related content thereof. For specific content of step 930, refer to step 830 in FIG. 8 and related content thereof. For specific content of step 940, refer to step 840 in FIG. 8 and related content thereof.

FIG. 10 is a schematic flowchart 3 of a model update method according to an embodiment of this application. The model update method shown in FIG. 10 may be implemented using the model update system in FIG. 2. As shown in FIG. 10, the method includes the following steps.

Step 1010: Display a first processing result.

Step 1020: Respond to an operation of inputting empirical text by a user, to obtain second knowledge data.

Step 1030: Respond to a model update instruction and update a model by using the second knowledge data, to obtain an updated model.

Step 1040: Obtain a second processing result based on the updated model, and display the second processing result.

For specific content of step 1010, refer to step 810 in FIG. 8 and related content thereof. For specific content of step 1020, refer to step 820 in FIG. 8 and related content thereof. For specific content of step 1030, refer to step 830 in FIG. 8 and related content thereof. For specific content of step 1040, refer to step 840 in FIG. 8 and related content thereof.

This application further provides a model update apparatus. As shown in FIG. 11, a model update apparatus 1100 includes a display module 1110, a processing module 1120, and an input module 1130. The display module 1110, the processing module 1120, and the input module 1130 may be configured to perform the method steps in FIG. 8, FIG. 9, and FIG. 10.

The display module 1110 is configured to display a first processing result, where the first processing result includes a first running analysis result that is of a network system and that is obtained by processing system data of the network system based on a model. The input module 1130 is configured to receive an operation of inputting knowledge data. The processing module 1120 is configured to respond to the operation of inputting the knowledge data, to obtain target knowledge data that is obtained by performing format conversion on the knowledge data, and the knowledge data includes knowledge data that is related to the processing result of the model. The input module 1130 is further configured to receive a model update instruction. The processing module 1120 is further configured to: respond to the model update instruction and update the model by using the target knowledge data, to obtain an updated model. In addition, the processing module 1120 is further configured to process the system data of the network system based on the updated model to obtain a second processing result, where the second processing result includes a second running analysis result of the network system. The display module 1110 is further configured to display the second processing result.

Optionally, the processing module 1120 is further configured to: receive feedback operation data, where the feedback operation data includes the first processing result and a feedback identifier, and the feedback identifier indicates a manner of updating the model based on the first processing result.

Optionally, the input module 1130 is further configured to: receive a trigger operation performed by a user on a feedback control displayed by a computer device.

Optionally, the processing module 1120 is further configured to: perform binary format conversion on the feedback operation data to obtain first knowledge data included in the target knowledge data.

Optionally, the input module 1130 is further configured to: receive empirical text input by the user.

Optionally, the processing module 1120 is further configured to: perform string format conversion on the empirical text to obtain second knowledge data included in the target knowledge data.

Optionally, the input module 1130 is further configured to: receive a text extraction intent input by the user.

Optionally, that the processing module 1120 is further configured to: perform string format conversion on the empirical text to obtain the second knowledge data included in the target knowledge data includes: performing text information extraction on the empirical text based on the text extraction intent to obtain target text, and performing string format conversion on the target text to obtain the second knowledge data.

Optionally, the model update instruction includes a weight of the target knowledge data, and the processing module 1120 is further configured to: adjust a parameter of the model by using the target knowledge data, where an adjustment amplitude of the parameter is related to the weight of the target knowledge data.

Optionally, a value of the weight is related to a quantity of operations of a feedback operation performed by the user on the first processing result.

Optionally, the display module 1110 is further configured to display an obtaining completion prompt of the target knowledge data.

Optionally, the display module 1110 is further configured to display the target knowledge data.

For more specific content of the method steps implemented by the display module 1110, the processing module 1120, and the input module 1130, refer to FIG. 2 to FIG. 10 and related descriptions thereof.

Optionally, the display module 1110, the processing module 1120, and the input module 1130 may separately include a plurality of submodules, and the plurality of submodules may be separately deployed to separately implement a part of functions of a corresponding module.

The apparatus may be implemented by using software, or may be implemented by using hardware. For example, the following describes an implementation of the model update apparatus 1100.

A module is used as an example of a software functional unit, and the model update apparatus may include code running on a compute instance. The compute instance may be at least one of computing devices such as a physical host (computing device), a virtual machine, and a container. Further, a quantity of the foregoing computing devices may be one or more. For example, the model update apparatus may include code running on a plurality of hosts/virtual machines/containers. It should be noted that the plurality of hosts/virtual machines/containers configured to run the code may be distributed in a same region, or may be distributed in different regions. The plurality of hosts/virtual machines/containers configured to run the code may be distributed in a same AZ, or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same VPC, or may be distributed in a plurality of VPCs. Generally, one VPC is set in one region. A communication gateway needs to be set in each VPC for cross-region communication between two VPCs in a same region or between VPCs in different regions. Interconnection between VPCs is implemented through the communication gateway.

A module is used as an example of a hardware functional unit, and the model update apparatus 1100 may include at least one computing device, for example, a server. Alternatively, the model update apparatus may be a device that is implemented by using an ASIC or a PLD, or the like. The PLD may be implemented by a CPLD, an FPGA, GAL, or any combination thereof.

A plurality of computing devices included in the model update apparatus 1100 may be distributed in a same region, or may be distributed in different regions. The plurality of computing devices included in the model update apparatus may be distributed in a same AZ, or may be distributed in different AZs. Similarly, a plurality of computing devices included in the model update apparatus may be distributed in a same VPC, or may be distributed in a plurality of VPCs. The plurality of computing devices may be any combination of computing devices such as a server, an ASIC, a PLD, a CPLD, an FPGA, and GAL.

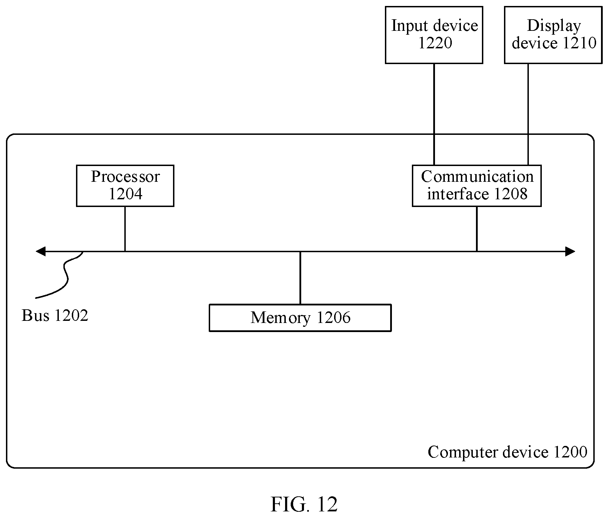

This application further provides a computing device 1200. As shown in FIG. 12, the computer device 1200 includes: a bus 1202, a processor 1204, a memory 1206, and a communication interface 1208. The processor 1204, the memory 1206, and the communication interface 1208 communicate with each other through the bus 1202. The computing device 1200 may be a server or a terminal device. It should be understood that quantities of processors and memories in the computer device 1200 are not limited in this application. The processor 1204 of the computer device 1200 may be connected to a display device 1210 and an input device 1220 through the communication interface 1208.

The bus 1202 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of indication, the bus is indicated by using only one line in FIG. 12. However, it does not indicate that there is only one bus or only one type of bus. The bus 1202 may include a path for transferring information between components (for example, the memory 1206, the processor 1204, and the communication interface 1208) of the computer device 1200.

The processor 1204 may include any one or more of processors, such as a central processing unit (central processing unit, CPU), a graphics processing unit (graphics processing unit, GPU), a microprocessor (microprocessor, MP), or a digital signal processor (digital signal processor, DSP).

The memory 1206 may include a volatile memory (volatile memory), for example, a random access memory (random access memory, RAM). The processor 1204 may further include a non-volatile memory (non-volatile memory), for example, a read-only memory (read-only memory, ROM), a flash memory, a hard disk drive (hard disk drive, HDD), or a solid state drive (solid state drive, SSD).

The memory 1206 stores executable program code, and the processor 1204 executes the executable program code to separately implement functions of the display module 1110, the processing module 1120, and the input module 1130 described above, to implement the model update method provided in embodiments of this application, for example, the model update method provided in FIG. 8, FIG. 9, and FIG. 10. In other words, the memory 1206 stores instructions used to perform the model update method provided in embodiments of this application.

The communication interface 1208 uses a transceiver module, for example, but not limited to, a network interface card or a transceiver, to implement communication between the computer device 1200 and another device or a communication network.

The display device 1210 may include various display devices that can implement a display function, such as a plasma display and a liquid crystal display.

The input device 1220 may include various input devices, such as a keyboard, a mouse, and a touchscreen that can implement user input.

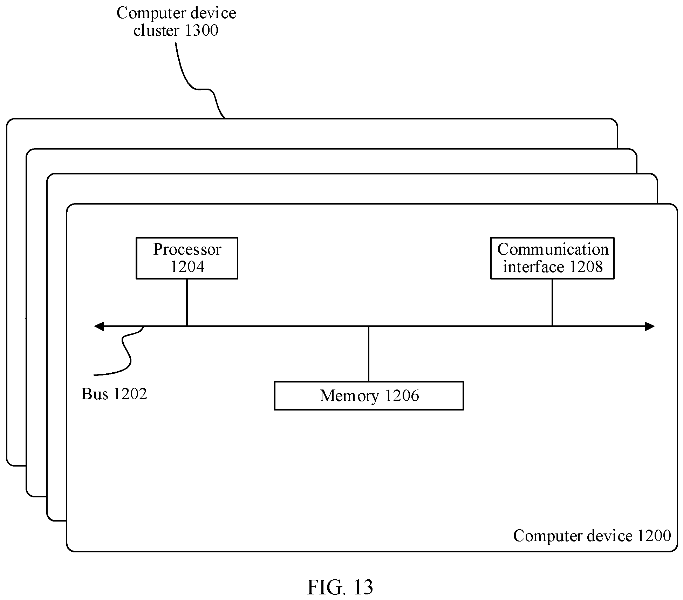

This application further provides a computer device cluster 1300. As shown in FIG. 13, the computer device cluster includes at least one computer device 1200. Memories 1206 in one or more computer devices 1200 in the computer device cluster may store same instructions used to perform the model update method provided in embodiments of this application, for example, the model update method provided in FIG. 8, FIG. 9, and FIG. 10.

In some possible implementations, the memories 1206 in the one or more computer devices 1200 in the computer device cluster may alternatively separately store a part of instructions used to perform the model update method provided in embodiments of this application, for example, instructions used to perform a part of steps of the model update method provided in FIG. 8, FIG. 9, and FIG. 10. In other words, a combination of the one or more computer devices 1200 may jointly implement the instructions used to perform the model update method provided in embodiments of this application.

It should be noted that the memories 1206 in different computer devices 1200 in the computer device cluster may store different instructions, which are separately used to implement a part of functions of the model update apparatus. In other words, the instructions stored in the memories 1206 in different computer devices 1200 may implement functions of one or more modules of the display module 1110, the processing module 1120, and the input module 1130 described above.

In some possible implementations, the one or more computer devices in the computer device cluster may be connected through a network. The network may be a wide area network, a local area network, or the like.

In some possible implementations, the memories 1206 in the one or more computer devices 1200 in the computer device cluster may alternatively separately store a part of instructions used to perform the model update method provided in embodiments of this application, for example, instructions used to perform a part of steps of the model update method provided in FIG. 8, FIG. 9, and FIG. 10. In other words, a combination of the one or more computer devices 1200 may jointly implement the instructions used to perform the model update method provided in embodiments of this application.

An embodiment of this application further provides a computer program product including instructions. The computer program product may be software or a program product that includes the instructions and that can run on a computer device or can be stored in any usable medium. When the computer program product runs on at least one computer device, the at least one computer device is caused to perform the model update method provided in embodiments of this application, for example, the model update method provided in FIG. 8, FIG. 9, and FIG. 10.

An embodiment of this application further provides a computer-readable storage medium. The computer-readable storage medium may be any usable medium accessible by a computer device, or a data storage device, for example, a data center including one or more usable media. The usable medium may be a magnetic medium (for example, a floppy disk, a hard disk, or a magnetic tape), an optical medium (for example, a DVD), a semiconductor medium (for example, a solid state drive), or the like. The computer-readable storage medium includes instructions, and the instructions instruct the computer device to perform the model update method provided in embodiments of this application, for example, instructions used to perform the model update method provided in FIG. 8, FIG. 9, and FIG. 10.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

In the specification, claims, and accompanying drawings of this application, the terms "first", "second", "third", "fourth", and so on are intended to distinguish between different objects but do not indicate a particular order.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word like "example" or "for example" is intended to present a related concept in a specific manner.

## Claims

1. A model update method, wherein the method is performed by a computer device, and the method comprises:
displaying a first processing result, wherein the first processing result comprises a first running analysis result that is of a network system and that is obtained by processing system data of the network system based on a model;
responding to an operation of inputting knowledge data to obtain target knowledge data, wherein the knowledge data comprises knowledge data that is input by a user and that is related to the processing result of the model, and the target knowledge data comprises data obtained by performing format conversion on the knowledge data;
responding to a model update instruction and updating the model by using the target knowledge data, to obtain an updated model; and
processing the system data of the network system based on the updated model to obtain a second processing result, and displaying the second processing result, wherein the second processing result comprises a second running analysis result of the network system.

2. The method according to claim 1, wherein responding to the operation of inputting the knowledge data comprises:
receiving feedback operation data, wherein the feedback operation data comprises the first processing result and a feedback identifier, and the feedback identifier indicates a manner of updating the model based on the first processing result.

3. The method according to claim 2, wherein responding to the operation of inputting the knowledge data comprises:
receiving a trigger operation performed by the user on a feedback control displayed by the computer device, wherein the computer device receives the feedback operation data.

4. The method according to claim 2 or 3, wherein responding to the operation of inputting the knowledge data to obtain the target knowledge data comprises:
performing binary format conversion on the feedback operation data to obtain first knowledge data comprised in the target knowledge data.

5. The method according to any one of claims 1 to 4, wherein responding to the operation of inputting the knowledge data comprises:
receiving empirical text input by the user.

6. The method according to claim 5, wherein responding to the operation of inputting the knowledge data to obtain the target knowledge data comprises:
performing string format conversion on the empirical text to obtain second knowledge data comprised in the target knowledge data.

7. The method according to claim 6, wherein responding to the operation of inputting the knowledge data further comprises:
receiving a text extraction intent input by the user; and
performing string format conversion on the empirical text to obtain the second knowledge data comprised in the target knowledge data comprises:
performing text information extraction on the empirical text based on the text extraction intent to obtain target text; and
performing string format conversion on the target text to obtain the second knowledge data.

8. The method according to any one of claims 1 to 7, wherein the model update instruction comprises a weight of the target knowledge data, and updating the model by using the target knowledge data comprises:
adjusting a parameter of the model by using the target knowledge data, wherein an adjustment amplitude of the parameter is related to the weight of the target knowledge data.

9. The method according to claim 8, wherein a value of the weight is related to a quantity of operations of a feedback operation performed by the user on the first processing result.

10. The method according to any one of claims 1 to 9, wherein the method further comprises: displaying an obtaining completion prompt of the target knowledge data.

11. The method according to any one of claims 1 to 10, wherein the method further comprises: displaying the target knowledge data.

12. A model update apparatus, comprising a display module, a processing module, and an input module, wherein
the display module is configured to display a first processing result, wherein the first processing result comprises a first running analysis result that is of a network system and that is obtained by processing system data of the network system based on a model;
the input module is configured to receive a data input operation;
the processing module is configured to respond to an operation of inputting knowledge data to obtain target knowledge data, wherein the knowledge data comprises knowledge data that is related to the processing result of the model, and the target knowledge data comprises data obtained by performing format conversion on the knowledge data;
the input module is further configured to receive a model update instruction;
the processing module is further configured to respond to the model update instruction and update the model by using the target knowledge data, to obtain an updated model;
the processing module is further configured to process the system data of the network system based on the updated model to obtain a second processing result, wherein the second processing result comprises a second running analysis result of the network system; and
the display module is further configured to display the second processing result.

13. A computer device, wherein the computer device comprises a processor, a memory, and a display, wherein
the memory is configured to store instructions, the processor is configured to execute the instructions stored in the memory, to cause the computer device to perform the method according to any one of claims 1 to 11, and the display is configured to implement a display step in a process in which the computer device performs the method.

14. A computer program product comprising instructions, wherein when the instructions are run by a computer device, the computer device is caused to perform the method according to any one of claims 1 to 11.

15. A computer-readable storage medium, comprising computer program instructions, wherein when the computer program instructions are executed by a computer device, the computer device performs the method according to any one of claims 1 to 11.
